# EUROPEAN PATENT SPECIFICATION

(11) **EP 3 554 673 B1**
(45) Date of publication and mention of the grant of the patent: **09.11.2022**
(21) Application number: 16923702.1
(22) Date of filing: 21.12.2016
(51) Int. Cl.: B01J 19/12

(54) **METHODS FOR SEPARATING OZONE**
VERFAHREN ZUR TRENNUNG VON OZON
PROCÉDÉS DE SÉPARATION D'OZONE

(30) Priority: 13.12.2016 US 201615377021
(43) Date of publication of application: 23.10.2019
(73) Proprietor: Linde GmbH, 82049 Pullach (DE)
(72) Inventor: FITCH, Frank, R., Bedminster, NJ 07921 (US); MAHESHWARY, Apurva, Edison, NJ 08820 (US)
(74) Representative: Gellner, Bernd
(86) International application number: PCT/US2016/068021
(87) International publication number: WO 2018/111308

(56) References cited:
- GB-A- 1 270 296
- US-A- 4 371 380
- US-A- 5 330 561
- US-A- 5 330 561
- US-A- 5 730 783
- US-A- 6 030 598
- US-A1- 2010 187 092
- US-A1- 2011 052 483
- US-A1- 2013 177 497
- US-B2- 8 029 603

## Description

### BACKGROUND OF THE INVENTION

Ozone is utilized in a number of industrial processes, including drinking water and waste water treatment and disinfection, pulp bleaching, ozonolysis reactions in fine chemical production, and flue-gas denitrification,

Ozone is unstable decomposing to oxygen under ambient conditions and hence cannot be manufactured, transported and stored in the manner of typical chemicals of commerce. Instead, ozone must be produced at point-of-use at the time it is needed. Since ozone is a toxic material its generation only where and when it is required limits the possibility and potential impact of incidents.

Ozone is typically generated from oxygen utilizing a corona discharge. If oxygen is used as the source of oxygen for a given ozone generator then ozone concentrations of 10 to 15% by weight (balance oxygen) can be prepared. If air is used as the source of oxygen then ozone concentrations of 1.5 to 3% (balance air) can be prepared. For moderate to large ozone requirements, the overall capital plus operating costs are typically less when oxygen is used as the oxygen source.

Ozone is therefore often utilized at 10 wt%, ozone with the balance being largely oxygen. It has long been recognized that the re-use of the oxygen from the ozone/oxygen mixture generated by oxygen-based ozone generators would substantially improve the economics for ozone generation. Many schemes have been proposed for the separation of ozone from the ozone/oxygen output stream from the ozone generator, thus allowing oxygen to be recycled back to the ozone generator. In most of these schemes the separated ozone is displaced into the final ozone-utilizing process by means of an inert gas stream. Balcar et al. Ozone Chemistry and Technology, pp 53 to 59, Advances in Chemistry; American Chemical Society, Washington, DC 1959 proposed the cryogenic liquefaction of the ozone, with re-evaporation of the condensed ozone into a carrier gas. Kiffer et al (US Pat No 2,872,397) and Cook et al., Ozone Chemistry and Technology, pp. 44 to 52, Advances in Chemistry; American Chemical Society, Washington, DC 1959 proposed the use of a silica gel adsorbent to selectively adsorb ozone from the ozone/oxygen mixture after cooling of the stream, with subsequent desorption of the ozone to the customer process by means of an inert gas, such as air, nitrogen, argon, etc., or by application of a vacuum.

Many improvements and variations on the use of selective adsorbents to allow recycle of the unused oxygen to the ozone generator and an ozone product stream have been proposed. These include the following patent specifications.

US Pat No 4,786,489 targets reducing the costs for large scale ozone and teaches the use of a low temperature (-80 to -90°C) ozone/oxygen separation unit that is purged with an impure nitrogen carrier gas stream containing oxygen and/or air to give the ozone product.

US Pat No 5,520,887 is targeted at reducing the costs of ozone generation for pulp bleaching and teaches the use of a PSA oxygen generator to provide an enriched oxygen feed to an ozone generator, an oxygen ozone PSA to adsorb ozone and at the same time recycle oxygen to the ozone generator. The nitrogen rich waste gas from the O₂ PSA is used to purge adsorbed ozone from the ozone oxygen PSA to the ozone consuming process.

US Pat No 6,030,598 describes the production of an ozone containing gas stream by subjecting oxygen to an electric discharge, adsorbing the ozone thus generated on to a solid adsorbent (such as zeolite) and recycling the oxygen containing stream leaving the adsorbent to the ozonising process. Periodically, oxygen adsorbed on the adsorbent is desorbed by co-currently passing a purge gas over the adsorbent and the desorbed oxygen is also recycled to the ozonizer. Ozone is desorbed from the adsorbent by a counter-current flow of purge gas and used in the ozone demanding process. A 3-bed (or multiple thereof) process and cycle is described that allows ozone and recycled oxygen to be produced continuously, but still requires each bed to experience a non-productive hold step within a full cycle.

US Pat No 6,197,091 describes the use of an ozone/oxygen membrane separation system in which ozone permeates through the membrane and is carried with a carrier gas, such as nitrogen, argon or CO₂ into the ozone utilizing application, and at the same time the oxygen enriched stream is recycled to the ozone generator.

US Pat No 6,916,359 describes a method of providing ozone at a pressure above atmospheric pressure that comprises an ozone generator and an oxygen ozone PSA system. The unadsorbed oxygen from the PSA is recycled back to the ozone generator and the ozone product is carried into the ozone application by means of an inert gas stream at a pressure such that no further compression is needed. The carrier gas can be nitrogen, but is preferentially compressed air used also to feed a PSA oxygen generator that can be used as the oxygen source.

US Pat No 7,766,995 is targeted at reducing the cost of ozone utilized in the removal and capture of NOx from industrial flue-gas and other process streams. It teaches the use of an oxygen ozone separation means to allow recycle of oxygen back to the ozone generator and the use of clean dry air to carry the ozone into the industrial process. Optimum ozone production costs are achieved by recycling oxygen to the ozone generator, using the cheapest possible carrier gas to carry the ozone to the point of use, and reducing the power utilization in the ozone generator by operating the generator at lower ozone concentrations than normal (e.g., 6%).

Many attempts (cf. the references US 5,730,783, US 4,371,380, US 5,330,561, US 2010/0187092 A1, GB 1 270 296) have been made to develop a process to reduce the cost of ozone generation from oxygen by recovering the unutilized oxygen and recycling this stream back to the ozone generation, but with limited commercial application.

What is needed is an efficient and reliable process that overcomes the fluctuations in pressure and concentration typically found in the products of PSA separation processes, without the need for large and expensive buffer tanks and which prevents the build-up of weakly adsorbed species, such as N₂ and Ar, in the recycled gas stream. The process of this invention provides the solution to these problems.

### SUMMARY OF THE INVENTION

In a first embodiment of the invention there is disclosed a method for the continuous production of ozone and recovery of oxygen in a purge cycle adsorption process having four adsorbent beds, in which the first, second, third and fourth beds each cycle sequentially through the following steps in an overlapping cycle:
a) Feeding an oxygen and ozone mixture from an ozone generator to a first bed, wherein ozone is adsorbed in the first bed and non-adsorbed oxygen passes through the first bed and is recycled back to the ozone generator;
b) Receiving rinse gas in a counter current direction to step a) from a third bed in step d) thereby desorbing ozone from the first bed to a customer process;
c) Feeding a nitrogen-rich purge gas in the counter current direction to step a) thereby desorbing the remaining ozone from the first bed to the customer process;
d) Feeding the oxygen and ozone mixture from the ozone generator to the first bed in the same direction as in step a) whereby ozone is adsorbed in the first bed and non-adsorbed oxygen rinse gas displaces the nitrogen-rich purge gas from the first bed and feeds the displaced nitrogen-rich purge gas to a third bed now in step b), preparing the first bed to repeat step a);
e) Feeding an oxygen and ozone mixture from an ozone generator to a second bed, wherein ozone is adsorbed in the second bed and non-adsorbed oxygen passes through the second bed and is recycled back to the ozone generator;
f) Receiving rinse gas in a counter current direction to step e) from a fourth bed in step h) thereby desorbing ozone from the second bed to a customer process;
g) Feeding a nitrogen-rich purge gas in the counter current direction to step e) thereby desorbing the remaining ozone from the second bed to the customer process;
h) Feeding the oxygen and ozone mixture from the ozone generator to the second bed in the same direction as in step e) whereby ozone is adsorbed in the second bed and non-adsorbed oxygen rinse gas displaces the nitrogen-rich purge gas from the second bed and feeds the displaced nitrogen-rich purge gas to a fourth bed now in step f), preparing the second bed to repeat step e);
wherein steps e) to h) are offset in time from steps a) to d) such that the beginning of steps a) and c) overlap with the end of steps e) and g) and the end of steps a) and c) overlap with the beginning of steps e) and g).

A portion of the rinse gas may be vented to the atmosphere at the start of steps d) and h).

The make-up oxygen is mixed with recycled oxygen before it is fed to the ozone generator.

The mixture of recycled oxygen and make-up oxygen is fed through a blower to increase its pressure before being fed to the ozone generator.

The mixture of recycled oxygen and make-up oxygen is passed through an inline ozone destruct unit prior to being fed to the blower.

The oxygen and ozone gas mixture that is fed to the adsorbent beds comprises about 1 to 30% by volume ozone.

More preferably, the oxygen and ozone gas mixture that is fed to the adsorbent beds comprises about 6 to 12% by volume ozone.

One source of nitrogen is clean dry air.

The buffer tanks are connected to a source selected from the group consisting of the recovered ozone, the recycled oxygen and both.

The first, second, third and fourth adsorbent beds contain an adsorbent material.

The adsorbent material is selected from the group consisting of silica gel and high silica zeolites.

The silica gel can be of different particle sizes, with larger beads located in layers at the inlet and outlet ends of the adsorption beds.

The high silica zeolites are selected from the group consisting of DAY, MFI and dealuminated mordentite.

The cycle is a concentration swing adsorption cycle.

The duration of steps a) and c) and e) and g) are equal and in the range 5 to 500 seconds, with a range of 50 to 300 seconds preferred and a range of 60 to 180 seconds more preferred.

The duration of steps b) and d) and f) and h) are equal and in the range of 5 to 90% of step a), with a range of 30 to 80% of step a) more preferred.

Further advantages of the present invention are discussed below. The adsorbent, preferably silica gel bed design uses different particle sizes for the separation of ozone from the mixture of oxygen and ozone. Alternatively, high silica zeolites such as DAY, MFI or dealuminated mordentite may be employed in place of the silica gel.

Venting of contaminants from the process will limit the build up of contaminants and harmful hydrocarbons that can cause damage to the ozone generator.

The bed purge step allows reuse of a purge gas and preserves oxygen gas compared to other processes.

The method utilizes four beds but eight and twelve bed cycles using similar steps can be employed as well.

The regeneration of the adsorbent bed using purge gas at elevated temperature not greater than 100°C improves regeneration and can be used to deliver ozone in higher concentrations as well as potentially reduce the size of the adsorbent bed.

The adsorption of the ozone and oxygen mixture can be at temperatures down to 0°C thereby reducing the size of the adsorbent beds.

The feed to the ozone generator and/or the first adsorbent bed could be compressed to pressures up to 50 psig (3.44 bar) to increase the adsorption capacity of the adsorbent thereby reducing the size of the adsorbent beds.

The use of an inline ozone destruction unit in the recycled oxygen line will prevent ozone breakthrough from the adsorbent beds to minimize downstream equipment damage.

The purge gas could be dry air or other nitrogen-rich gas stream with a dew point of -80°F or lower.

The beds may be equipped with an internal source of heating or cooling to maximize the use of the adsorbent material.

Alternatively the feed to the adsorbent bed can be from the top of the bed and the purge can be performed from the bottom of the adsorbent bed.

An external ozone buffer tank can be employed, in the line taking the ozone product to the customer process to reduce swings in ozone purity.

The four bed method can be a continuous means to remove ozone from the ozone and oxygen gas mixture while minimizing the pressure or concentration swing impact in recycled oxygen gas and ozone product gas.

### BRIEF DESCRIPTION OF THE DRAWINGS

Figure 1 is a schematic of the inventive four bed process to recover oxygen from an ozone and oxygen gas mixture.
Figure 2 is a schematic of the cycle steps for the four bed oxygen recovery process.
Figure 3 is a valve table illustrating the valve positions of Figure 1 in different cycle sequence steps.
Figure 4 is a schematic illustrating step 1 for the bed D from Figure 1.
Figure 5 is a schematic illustrating step 2 for the bed D from Figure 1.
Figure 6 is a schematic illustrating step 3 for the bed D from Figure 1.
Figure 7 is a schematic illustrating step 4 for the bed D from Figure 1.
Figure 8 is a schematic illustrating step 5 for the bed D from Figure 1.

### DETAILED DESCRIPTION OF THE INVENTION

The method of the present invention is an adsorption process for separating ozone from a mixture of oxygen and ozone in a process using four adsorption beds. It is envisioned that the process can be extended to include eight or twelve beds using similar sequence steps for the four bed as discussed below.

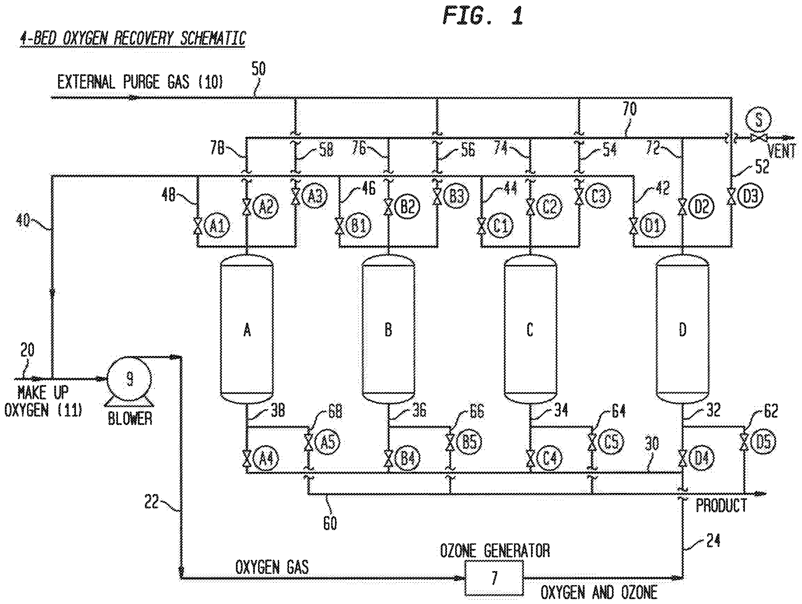

The method of the present invention uses silica gel as the adsorbent material to adsorb ozone. This adsorbent material is designed to have low metal contamination to prevent dissociation of ozone molecules back to oxygen molecules. In general, the adsorbent material is selected from the group consisting of silica gel and high silica zeolites, such as DAY, MFI or dealuminated mordentite. The beds as identified in Figure 1 as A, B, C and D have three layers of different sizes of silica gel.

The first layer at the bottom of the bed contains larger particle sizes of 3 to 5 millimeter in size. This layer is designed in part to allow higher initial flow of gas into the process without danger of fluidization of the bed. This layer is between 5 to 15% of the total weight of silica gel adsorbent being used in the process.

The second layer from the bottom or middle layer has a smaller particle size and thereby high adsorption capacity and faster diffusion kinetics to allow faster cycle steps. The smaller particle sizes are typically 0.5 to 1.5 millimeter. These particles will allow better gas distribution due to higher pressure drop.

The top layer has a larger particle size. This layer will account for 5 to 15% of the total weight of adsorbent used in the process. The larger particle size allows lower susceptibility to fluidization of the top layer. These particles are typically 3 to 5 millimeters in size.

The beds are designed to operate at about 0.5 to 2.5 pounds per square inch (psi) pressure drop during operation.

Figure 1 is a 4-bed oxygen recovery schematic of the invention.

Make up oxygen is supplied to the system through line 20 where it is mixed with recycled oxygen from the beds. The combined oxygen stream is fed through blower 9 to an ozone generator 7. The ozone generator will generate ozone at concentrations of 1 to 30%, preferably 5 to 15%, most preferably 8 to 10% by volume which is then fed through line 30 a manifold used to supply oxygen/ozone mixtures to the bottom of the adsorbent beds. Ozone is adsorbed within the selected adsorbent bed or beds. Line 40 collects the oxygen that passes un-adsorbed through the tops of the selected beds and recycles this stream back to the inlet to the blower 9 where it is mixed with make up oxygen. Line 50 supplies the external nitrogen rich purge gas to the tops of the beds that is used to desorb the ozone from said bed or beds. Line 60 collects the ozone product displaced from the bottom of the beds to the customer process. Manifold 70 allows oxygen rich gas to be passed from the top of a first bed to the top of a second bed, thus removing residual nitrogen from said second bed and optionally allowing any contaminants or excess inert gases to be vented externally through valve 6.

X represents an adsorbent bed and this can be any of A, B, C or D as depicted in Figure 1. Likewise reference to a valve number preceded by X should be interpreted as being for that valve number for any of the beds A, B, C or D.

Each Bed X (X =A, B, C or D) has 2 valves controlling gas flows at the bottom (X4 and X5) and 3 valves at the top (X1, X2 and X3). For a given bed, X, only one valve at the top and one valve at the bottom is open at any one time. Valves X4 connect the bottom of bed X to the oxygen/ozone manifold, Line 30, Valves X1 connect the top of Bed X to the recycle oxygen Line 40. Valves X3 connect the top of bed X to the external nitrogen rich purge gas stream line 50. Valves X5 connect the bottoms of the bed to Line 60 the ozone product line to the customer. Valves X2 connect the top of bed X to the manifold 70 that allows gas to be transferred between the tops of two of the beds and optionally vented externally via Valve 6.

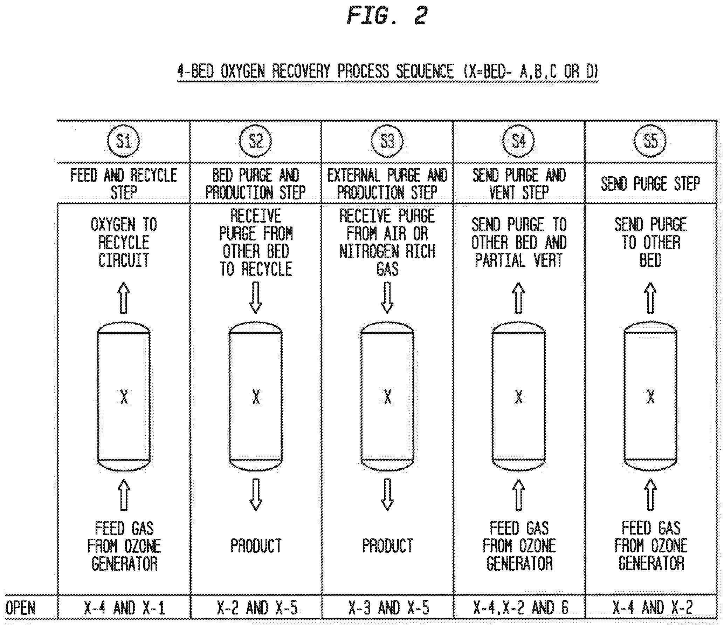

Figure 2 depicts the sequence of steps that are undergone in the four bed oxygen recovery process of this invention.

In step 1 of the process S1, the feed gas from the ozone generator enters the bed X through valve X-4. The ozone in the feed gas is selectively adsorbed on the adsorbent in bed X. The recovered oxygen passes through the bed X and through valve X-1 and is sent to the recycle circuit. In the recycle circuit, the recovered oxygen is mixed with the makeup oxygen. The net oxygen is then compressed by a blower to overcome the pressure loss in the system and is sent to the ozone generator.

After the bed is saturated with ozone in S1, and just before the ozone starts to break through from the adsorbent bed X, step 2 (S2) of the cycle is initiated. A stream of initially nitrogen rich purge gas from another bed is fed to the top of bed X through valve X2. The purge gas comes from a bed which has just switched to oxygen/ozone feed gas and is under going step 4 (S4) and step 5 (S5) at that time. The purge gas causes the ozone adsorbed in the bed X to get desorbed and pass through valve X5 to give product ozone to the customer.

After the conclusion of S2, an external purge gas stream is introduced into the top of bed X through valve X3 in step 3 (S3). This external purge gas can be either dry air or any other dry nitrogen rich gas with a dew point less than -80°F. The purge gas further desorbs ozone on the adsorbent bed X and passes through valve X5 as product in a manner similar as in S2.

Once the ozone has sufficiently desorbed from the adsorbent bed X at the conclusion of S3, the feed gas from the ozone generator is reintroduced through valve X4. This commences step 4 (S4). In S4, unlike S1, the resulting unadsorbed gas at the top of the bed X initially has more nitrogen content from the purge step S3. This gas is utilized as a purge gas for another bed through valve X2. Also a portion of this gas is vented from the process through the vent valve to prevent the build up of unwanted contaminants like argon, hydrocarbons or water in the recycle oxygen gas.

This short vent of the contaminants is the only difference between S4 and step 5 (S5). In S5, the vent valve depicted as valve 6 in Figure 1 is closed and the purge gas from the adsorbent bed X is continued to flow as purge to the other bed. As steps S4 and S5 proceed residual nitrogen in bed X is displaced by adsorbed ozone and unadsorbed oxygen, so that at the end of step 5, bed X is in the correct state to restart the cycle at step 1.

The duration of step 4 depends on the nature and amounts of impurities that can be tolerated in the feed to the ozone generator. Under some circumstances this step may be omitted or utilized only intermittently, e.g. once every x cycles. The duration of step 4 plus step 5, or step 5 alone if step 4 is omitted, depends on the level of nitrogen required in the feed to the ozone generator.

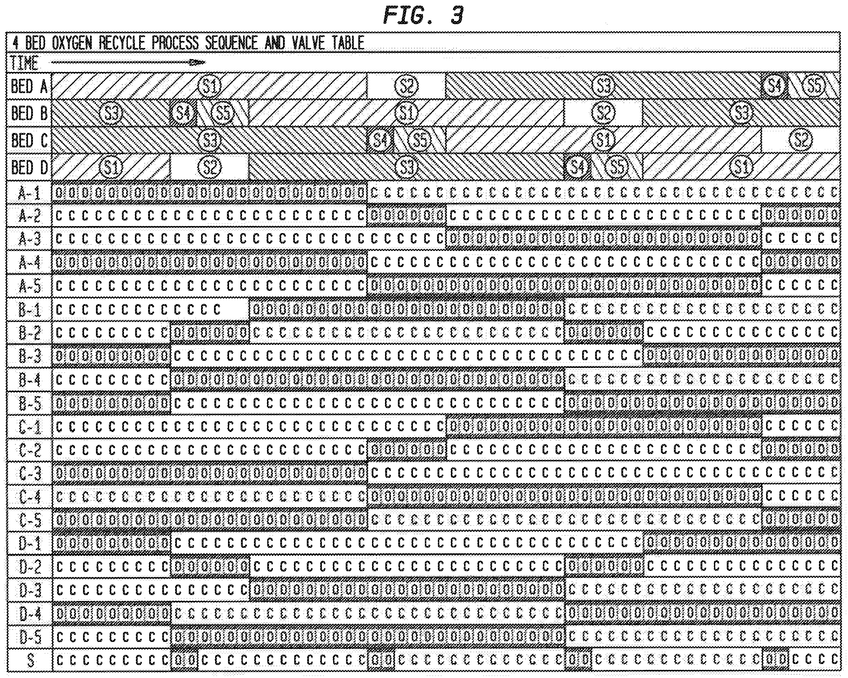

Figure 3 is an overview of the adsorption process sequence steps S1 through S5 versus the status of the valves as being either "o" (open) or "c" (closed). The valves identified are those from Figure 1 (X-1, X-2, X-3, X-4 and X-5 where X can be one or more of A, B, C or D and valve 6). The sequence steps identified as S1, S2, S3, S4 and S5 are those discussed above with reference to Figure 2.

Inspection of Figure 3 shows that the unique cycle of this invention may be viewed as the integration of two 2 bed cycles offset in time to ensure that the pressures and concentrations of the recycled oxygen and the ozone product meet both the requirements of the ozone generator and the customer process without the need for large buffer tanks. Beds A and C, and B and D form these two subsets of beds. When Bed A is in step S1 of the cycle, Bed C is in step S3, and visa-versa. When Bed A is in step S2 then Bed C undergoes Steps S4 and S5, and visa-versa. Similarly, when Bed B is in step S1 of the cycle, Bed D is in step S3, and visa-versa. When Bed B is in step S2 then Bed D undergoes Steps S4 and S5, and visa-versa. The internal purge step S2 vs S4/S5 for beds A and C occur in the middle of the oxygen recycle and ozone production steps S1/S3 for beds B and D, and visa-versa. In addition, for both steps S1 and S3, the offset cycles of the subsets of beds, A / C and B / D, ensure that, e.g. the last portion of bed A being on step S1 overlaps with the first portion of bed B being on step S1, the last portion of bed B being on step S1 overlaps with the first portion of bed C being on step S1, the last portion of bed C being on step S1 overlaps with the first portion of bed D being on step S1, the last portion of bed D being on step 1 overlaps with the first portion of bed A being on step S1, and so on, and likewise for step 3.

The step time for step S1 is equal to the step time for step S3, and falls in the range 5 to 500 seconds, preferably 50 to 300 seconds and most preferably 60 to 180 seconds.

The step time for step S2 equal to the sum of the step times of steps S4 and S5 and falls in the range 5 to 90% of the step time of step S1, preferably 30 to 80% of S1.

The 4 bed cycle of the current invention allows for the continuous production of recycle oxygen and of ozone in the external purge gas stream. Operation of the cycle in concentration swing mode, i.e. with the minimum of pressure or temperature swings between the adsorption and desorption steps, ensures that the pressures of the two product streams remain roughly constant. This mode of operation, together with the novel overlapping steps, allows the system to run without the need for large buffer tanks.

Small buffer tanks may, however, be added to one or both of the recycle oxygen and ozone product lines, in order to meet stringent needs imposed by the ozone generator manufacturer or the ozone customer.

The regeneration of the adsorbent bed using purge gas at elevated temperature not greater than 100°C improves regeneration and can be used to deliver ozone in higher concentrations as well as potentially reduce the size of the adsorbent bed.

The adsorption of the ozone and oxygen mixture can be at temperatures down to 0°C thereby reducing the size of the adsorbent beds.
The feed to the ozone generator could be compressed to pressures up to 50 psig (3.44 bar) to increase the adsorption capacity of the adsorbent thereby reducing the size of the adsorbent beds.

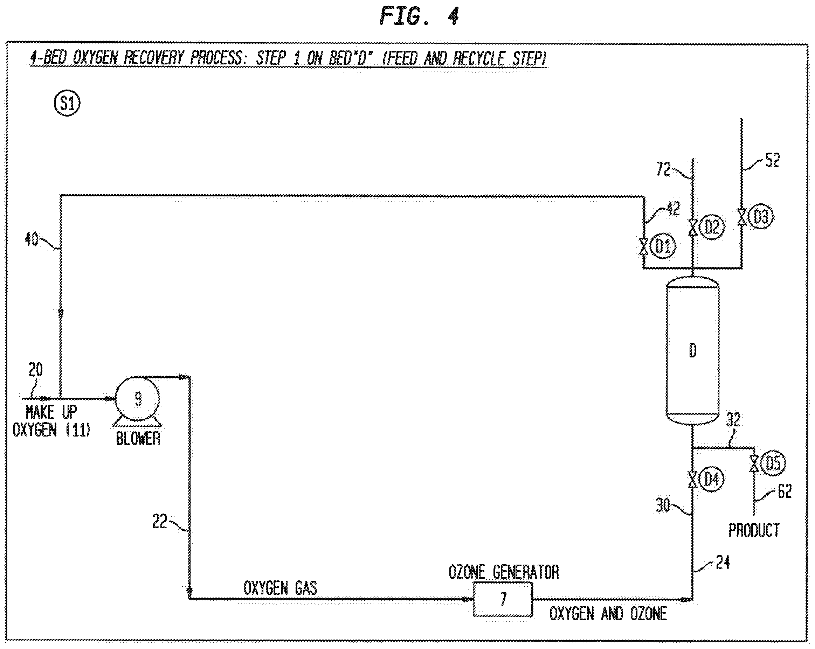

Figures 4 through 8 are individual breakdowns of each step S1 through S5 described above in greater detail as exemplified for adsorbent bed D.

In Figure 4, adsorbent bed D is on the feed and recycle step S1. Makeup oxygen is fed through line 20 to blower 9 which will deliver pressurized oxygen through line 22 to ozone generator 7. The resulting mixture of ozone and oxygen is fed through line 24 and open valve D4 via line 30 to adsorbent bed D where ozone is adsorbed and the oxygen is fed through line 40 and open valve D1 back to line 20 to join with the makeup oxygen feed.

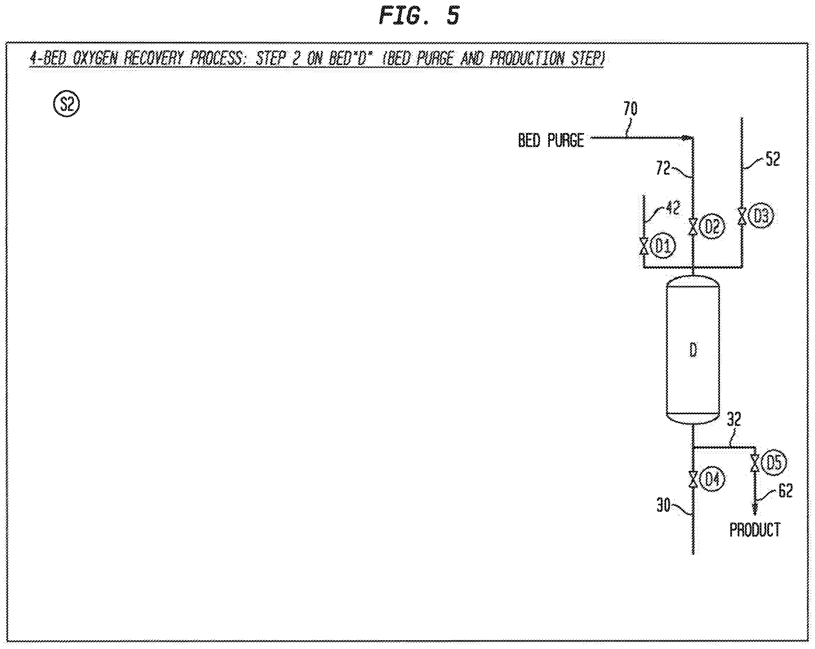

In Figure 5, adsorbent bed D is on bed purge step, S2. Line 70 delivers a purge gas which is removed from the top of bed B and is fed through open valve D2 into adsorbent bed D where it will sweep out part of the ozone adsorbed from S1. The ozone exits the adsorbent bed D through line 32 and open valve D5 to line 62 where it will be collected in Line 60 and delivered to the customer process.

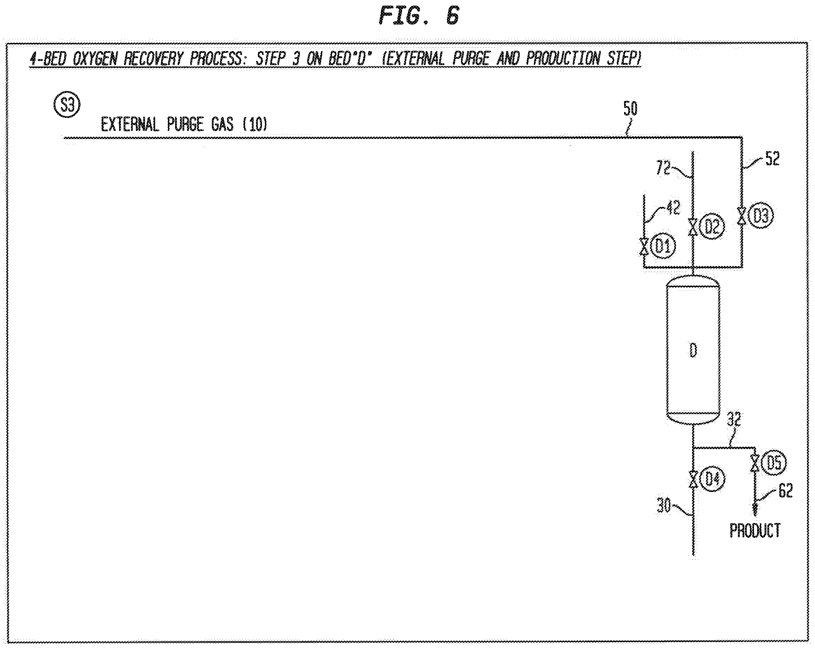

In Figure 6, adsorbent bed D is on the third step S3 which is external purge step. An external purge gas which comprises air or another nitrogen rich gas is fed through line 50 and open valve D3 via line 52 into adsorbent bed D where it will sweep the adsorbed ozone out of the adsorbent and be fed through line 32 and open valve D5 to line 62 where the ozone can be collected in line 60 and delivered to the customer process.

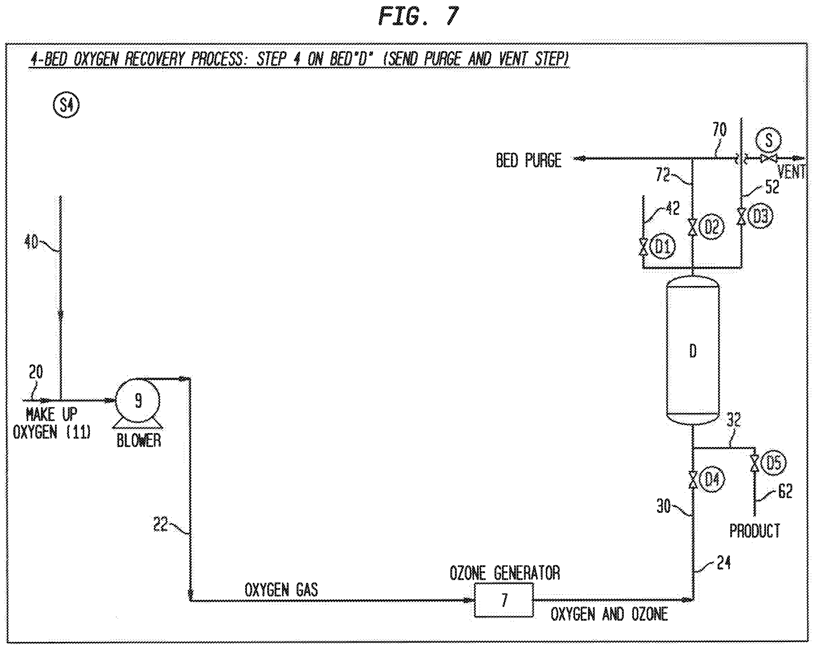

Figure 7 is the send purge and vent step S4 for adsorbent bed D. Recycled oxygen from line 40 is mixed with makeup oxygen from line 20 offsetting oxygen that has been utilized in ozone generation and fed rinsing and fed to blower 9 which will deliver pressurized oxygen through line 22 to ozone generator 7. The resulting mixture of ozone and oxygen is fed through line 24 and open valve D4 to adsorbent bed D via line 30.

Oxygen will exit the adsorbent bed D through line 72 and open valve D2 after ozone is adsorbed from the mixture of oxygen and ozone. The oxygen will be fed through line 72 to line 70 where it will be directed to the top of another bed, B which is in step S2, where it will act to purge that bed as well as be fed through open valve 6 for venting to the atmosphere.

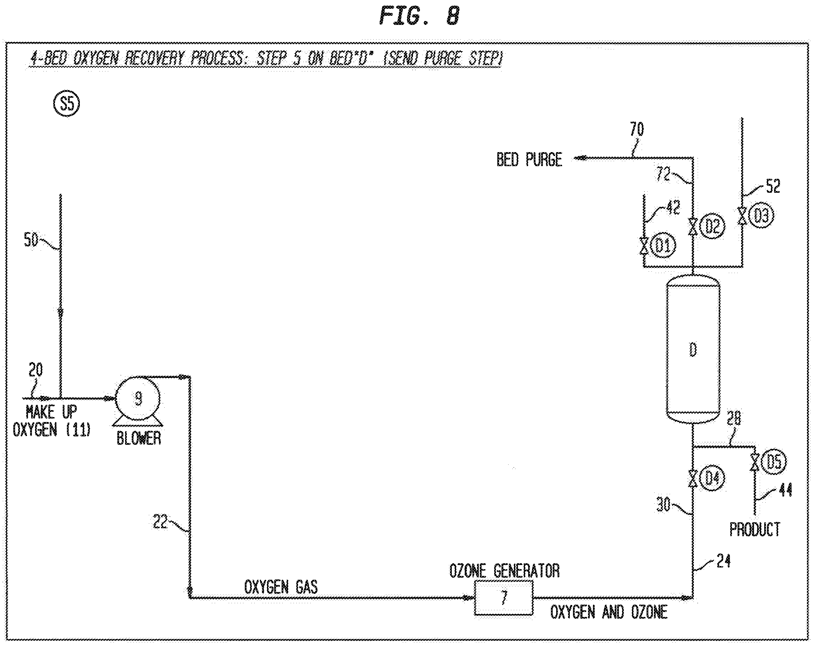

In Figure 8, the adsorbent bed D is on step 5 which is the send purge step S5. Recycled oxygen from line 40 is mixed with makeup oxygen from line 20 offsetting oxygen that has been utilized in ozone generation and fed rinsing and fed to blower 9 which will deliver pressurized oxygen through line 22 to ozone generator 7. The resulting mixture of ozone and oxygen is fed through line 24 and open valve D4 via line 30 to adsorbent bed D.

The oxygen that is separated from the oxygen and ozone mixture will leave the top of the adsorbent bed D through line 72 and open valve D2 where it will be fed to the top of bed B to push the nitrogen initially in bed D at the end of step S3 through bed B and into the ozone product and leave oxygen in the gas space in bed D ready for it restarting the cycle on step S1.

While this invention has been described with respect to particular embodiments thereof, further forms and modifications of the invention are covered by the scope of the present invention defined in the appended claims.

## Claims

1. A method for the continuous production of ozone and recovery of oxygen in a purge cycle adsorption process having four adsorbent beds (A, B, C, D), in which the first (A), second (B), third (C) and fourth (D) beds each cycle sequentially through the following steps in an overlapping cycle:
a) Feeding an oxygen and ozone mixture from an ozone generator (7) to a first bed (A), wherein ozone is adsorbed in the first bed (A) and non-adsorbed oxygen passes through the first bed (A) and is recycled back to the ozone generator (7);
b) Receiving rinse gas in a counter current direction to step a) from a third bed (C) in step d) thereby desorbing ozone from the first bed (A) to a customer process;
c) Feeding a nitrogen-rich purge gas in the counter current direction to step a) thereby desorbing the remaining ozone from the first bed (A) to the customer process;
d) Feeding the oxygen and ozone mixture from the ozone generator (7) to the first bed (A) in the same direction as in step a) whereby ozone is adsorbed in the first bed (A) and non-adsorbed oxygen rinse gas displaces the nitrogen-rich purge gas from the first bed (A) and feeds the displaced nitrogen-rich purge gas to a third bed (C) now in step b), preparing the first bed (A) to repeat step a);
e) Feeding an oxygen and ozone mixture from an ozone generator (7) to a second bed (B), wherein ozone is adsorbed in the second bed (B) and non-adsorbed oxygen passes through the second bed (B) and is recycled back to the ozone generator (7);
f) Receiving rinse gas in a counter current direction to step e) from a fourth bed (D) in step h) thereby desorbing ozone from the second bed (B) to a customer process;
g) Feeding a nitrogen-rich purge gas in the counter current direction to step e) thereby desorbing the remaining ozone from the second bed (B) to the customer process;
h) Feeding the oxygen and ozone mixture from the ozone generator (7) to the second bed (B) in the same direction as in step e) whereby ozone is adsorbed in the second bed (B) and non-adsorbed oxygen rinse gas displaces the nitrogen-rich purge gas from the second bed (B) and feeds the displaced nitrogen-rich purge gas to a fourth bed (D) now in step f), preparing the second bed (B) to repeat step e);
wherein steps e) to h) are offset in time from steps a) to d) such that the beginning of steps a) and c) overlap with the end of steps e) and g) and the end of steps a) and c) overlap with the beginning of steps e) and g), and
wherein the duration of steps b) and d) and steps f) and h) are equal and in the range of 5 to 90% of step a).

2. The method as claimed in claim 1 further comprising venting a portion of the rinse gas to the atmosphere at the start of step d) and step h).

3. The method as claimed in claim 1 in which make-up oxygen is mixed with recycled oxygen before it is fed to the ozone generator (7).

4. The method as claimed in claim 3 in which the mixture of recycled oxygen and make-up oxygen is fed through a blower (9) to increase its pressure before being fed to the ozone generator (7).

5. The method as claimed in claim 3 in which the mixture of recycled oxygen and make-up oxygen is passed through an inline ozone destruct unit prior to being fed to the blower (9).

6. The method as claimed in claim 1 wherein the oxygen and ozone gas mixture that is fed to the adsorbent beds (A, B, C, D) comprises 1 to 30%, in particular 6 to 12%, by volume ozone

7. The method as claimed in claim 1 wherein a source of nitrogen is clean dry air.

8. The method as claimed in claim 1 wherein buffer tanks are connected to a source selected from the group consisting of the recovered ozone, the recycled oxygen and both.

9. The method as claimed in claim 1 wherein the first (A), second (B), third (C) and fourth (D) adsorbent beds contain an adsorbent material.

10. The method as claimed in claim 9 wherein the adsorbent material is selected from the group consisting of silica gel and high silica zeolites.

11. The method as claimed in claim 10 wherein the silica gel is of different particle sizes.

12. The method as claimed in claim 10 wherein the high silica zeolites are selected from the group consisting of DAY, MFI and dealuminated mordentite.

13. The method as claimed in claim 1 wherein the cycle is a concentration swing adsorption cycle.

14. The method as claimed in claim 1 wherein the duration of steps a) and c) and steps e) and g) are equal and in the range of 5 to 500 seconds, in particular in the range of 50 to 300 seconds, for example in the range of 60 to 180 seconds.

15. The method as claimed in claim 1 wherein the duration of steps b) and d) and steps f) and h) are in the range of 30 to 80% of step a).

## Patentansprüche

1. Verfahren für die kontinuierliche Produktion von Ozon und Ausbeute von Sauerstoff in einem Spülzyklus-Adsorptionsprozess, der vier Adsorbensschichten (A, B, C, D) aufweist, in dem die erste (A), die zweite (B), die dritte (C) und die vierte (D) Schicht die folgenden Schritte in einem überlappenden Zyklus jeweils nacheinander durchlaufen:
a) Zuführen einer Sauerstoff- und Ozonmischung aus einem Ozongenerator (7) zu einer ersten Schicht (A), wobei Ozon in der ersten Schicht (A) adsorbiert wird und nicht adsorbierter Sauerstoff durch die erste Schicht (A) fließt und zu dem Ozongenerator (7) wieder zurück durchlaufen wird;
b) Empfangen von Waschgas in einer Gegenstromrichtung zu Schritt a) von einer dritten Schicht (C) in Schritt d), wobei dadurch Ozon aus der ersten Schicht (a) zu einem Kundenprozess desorbiert;
c) Zuführen eines stickstoffreichen Spülgases in die Gegenstromrichtung zu Schritt a), wobei dadurch das verbleibende Ozon aus der ersten Schicht (A) zu dem Kundenprozess desorbiert;
d) Zuführen der Sauerstoff- und Ozonmischung aus dem Ozongenerator (7) zu der ersten Schicht (A) in der gleichen Richtung wie in Schritt a), wodurch Ozon in der ersten Schicht (A) adsorbiert wird und nicht adsorbiertes Sauerstoffwaschgas das stickstoffreiche Spülgas aus der ersten Schicht (A) verdrängt und das verdrängte stickstoffreiche Spülgas jetzt in Schritt b) zu einer dritten Schicht (C) zuführt, wobei die erste Schicht (A) vorbereitet wird, um Schritt a) zu wiederholen;
e) Zuführen einer Sauerstoff- und Ozonmischung aus einem Ozongenerator (7) zu einer zweiten Schicht (B), wobei Ozon in der zweiten Schicht (B) adsorbiert wird und nicht adsorbierter Sauerstoff durch die zweite Schicht (B) fließt und zu dem Ozongenerator (7) wieder zurück durchlaufen wird;
f) Empfangen von Waschgas in einer Gegenstromrichtung zu Schritt e) von einer vierten Schicht (D) in Schritt h), wobei dadurch Ozon aus der zweiten Schicht (B) zu einem Kundenprozess desorbiert;
g) Zuführen eines stickstoffreichen Spülgases in die Gegenstromrichtung zu Schritt e), wobei dadurch das verbleibende Ozon aus der zweiten Schicht (B) zu dem Kundenprozess desorbiert;
h) Zuführen der Sauerstoff- und Ozonmischung aus dem Ozongenerator (7) zu der zweiten Schicht (B) in der gleichen Richtung wie in Schritt e), wodurch Ozon in der zweiten Schicht (B) adsorbiert wird und nicht adsorbiertes Sauerstoffwaschgas das stickstoffreiche Spülgas aus der zweiten Schicht (B) verdrängt und das verdrängte stickstoffreiche Spülgas jetzt in Schritt f) zu einer vierten Schicht (D) zuführt, wobei die zweite Schicht (B) vorbereitet wird, um Schritt e) zu wiederholen;
wobei die Schritte e) bis h) von den Schritten a) bis d) derart zeitlich versetzt sind, dass sich der Beginn der Schritte a) und c) mit dem Ende der Schritte e) und g) überlappt und das Ende der Schritte a) und c) mit dem Beginn der Schritte e) und g) überlappt und
wobei die Dauer der Schritte b) und d) und der Schritte f) und h) gleich und in dem Bereich von 5 bis 90 % von Schritt a) liegt.

2. Verfahren nach Anspruch 1, ferner umfassend ein Entlüften eines Anteils des Waschgases in die Atmosphäre zu Beginn von Schritt d) und Schritt h).

3. Verfahren nach Anspruch 1, in dem Zubereitungssauerstoff mit wieder durchlaufenem Sauerstoff gemischt wird, bevor er dem Ozongenerator (7) zugeführt wird.

4. Verfahren nach Anspruch 3, in dem die Mischung aus wieder durchlaufenem Sauerstoff und Zubereitungssauerstoff durch ein Gebläse (9) zugeführt wird, um ihren Druck zu erhöhen, bevor sie dem Ozongenerator (7) zugeführt wird.

5. Verfahren nach Anspruch 3, in dem die Mischung aus wieder durchlaufenem Sauerstoff und Zubereitungssauerstoff durch eine Inline-Ozonzerstörungseinheit fließt, bevor sie dem Gebläse (9) zugeführt wird.

6. Verfahren nach Anspruch 1, wobei die Sauerstoff- und Ozongasmischung, die den adsorbierenden Schichten (A, B, C, D) zugeführt wird, 1 bis 30 Vol-%, insbesondere 6 bis 12 Vol-% Ozon umfasst

7. Verfahren nach Anspruch 1, wobei eine Stickstoffquelle saubere trockene Luft ist.

8. Verfahren nach Anspruch 1, wobei Puffertanks mit einer Quelle verbunden sind, die aus der Gruppe ausgewählt ist, bestehend aus dem ausgebeuteten Ozon, dem wieder durchlaufenen Sauerstoff und beiden.

9. Verfahren nach Anspruch 1, wobei die erste (A), die zweite (B), die dritte (C) und die vierte (D) absorbierende Schicht ein adsorbierendes Material enthalten.

10. Verfahren nach Anspruch 9, wobei das adsorbierende Material aus der Gruppe ausgewählt ist, bestehend aus Kieselgel und Zeolithen mit hohem Kieselerdegehalt.

11. Verfahren nach Anspruch 10, wobei das Kieselgel unterschiedliche Partikelgrößen aufweist.

12. Verfahren nach Anspruch 10, wobei die Zeolithen mit hohem Kieselerdegehalt aus der Gruppe ausgewählt sind, bestehend aus DAY, MFI und dealuminiertem Mordentit.

13. Verfahren nach Anspruch 1, wobei der Zyklus ein Konzentrationswechseladsorptionszyklus ist.

14. Verfahren nach Anspruch 1, wobei die Dauer der Schritte a) und c) und der Schritte e) und g) gleich und in dem Bereich von 5 bis 500 Sekunden, insbesondere in dem Bereich von 50 bis 300 Sekunden, beispielsweise in dem Bereich von 60 bis 180 Sekunden, liegt.

15. Verfahren nach Anspruch 1, wobei die Dauer der Schritte b) und d) und der Schritte f) und h) in dem Bereich von 30 bis 80 % von Schritt a) liegt.

## Revendications

1. Procédé pour la production continue d'ozone et la récupération d'oxygène dans un processus d'adsorption à cycle de purge ayant quatre lits d'adsorbant (A, B, C, D), dans lequel les premier (A), deuxième (B), troisième (C) et quatrième (D) lits passent chacun séquentiellement de manière cyclique à travers les étapes suivantes dans un cycle se chevauchant :
a) alimentation d'un mélange d'oxygène et d'ozone provenant d'un générateur d'ozone (7) vers un premier lit (A), dans lequel de l'ozone est adsorbé dans le premier lit (A) et de l'oxygène non adsorbé passe à travers le premier lit (A) et est recyclé vers le générateur d'ozone (7) ;
b) réception d'un gaz de rinçage dans une direction à contre-courant vers l'étape a) à partir d'un troisième lit (C) à l'étape d) ce qui désorbe l'ozone provenant du premier lit (A) vers un processus client ;
c) alimentation d'un gaz de purge riche en azote dans la direction à contre-courant vers l'étape a) ce qui désorbe l'ozone restant provenant du premier lit (A) vers le processus client ;
d) alimentation du mélange d'oxygène et d'ozone provenant du générateur d'ozone (7) vers le premier lit (A) dans la même direction qu'à l'étape a) moyennant quoi de l'ozone est adsorbé dans le premier lit (A) et un gaz de rinçage d'oxygène non adsorbé déplace le gaz de purge riche en azote provenant du premier lit (A) et alimente le gaz de purge riche en azote déplacé vers un troisième lit (C) maintenant à l'étape b), préparant le premier lit (A) à répéter l'étape a) ;
e) alimentation d'un mélange d'oxygène et d'ozone provenant d'un générateur d'ozone (7) vers un deuxième lit (B), dans lequel de l'ozone est adsorbé dans le deuxième lit (B) et de l'oxygène non adsorbé passe à travers le deuxième lit (B) et est recyclé vers le générateur d'ozone (7) ;
f) réception de gaz de rinçage dans une direction à contre-courant vers l'étape e) à partir d'un quatrième lit (D) à l'étape h) ce qui désorbe l'ozone provenant du deuxième lit (B) vers un processus client ;
g) alimentation d'un gaz de purge riche en azote dans la direction à contre-courant vers l'étape e) ce qui désorbe l'ozone restant provenant du deuxième lit (B) vers le processus client ;
h) alimentation du mélange d'oxygène et d'ozone provenant du générateur d'ozone (7) vers le deuxième lit (B) dans la même direction qu'à l'étape e) moyennant quoi de l'ozone est adsorbé dans le deuxième lit (B) et un gaz de rinçage d'oxygène non adsorbé déplace le gaz de purge riche en azote provenant du deuxième lit (B) et alimente le gaz de purge riche en azote déplacé vers un quatrième lit (D) maintenant à l'étape f), préparant le deuxième lit (B) à répéter l'étape e) ;
dans lequel les étapes e) à h) sont décalées dans le temps par rapport aux étapes a) à d) de telle sorte que le début des étapes a) et c) chevauche la fin des étapes e) et g) et la fin des étapes a) et c) chevauche le début des étapes e) et g), et
dans lequel la durée des étapes b) et d) et celle des étapes f) et h) sont égales et dans la plage de 5 à 90 % de l'étape a).

2. Procédé tel que revendiqué dans la revendication 1 comprenant en outre l'échappement d'une partie du gaz de rinçage vers l'atmosphère au début de l'étape d) et de l'étape h).

3. Procédé tel que revendiqué dans la revendication 1 dans lequel de l'oxygène d'appoint est mélangé à de l'oxygène recyclé avant qu'il soit alimenté au générateur d'ozone (7).

4. Procédé tel que revendiqué dans la revendication 3 dans lequel le mélange d'oxygène recyclé et d'oxygène d'appoint est alimenté à travers une soufflante (9) pour augmenter sa pression avant d'être alimenté au générateur d'ozone (7).

5. Procédé tel que revendiqué dans la revendication 3 dans lequel on fait passer le mélange d'oxygène recyclé et d'oxygène d'appoint à travers une unité de destruction d'ozone en ligne avant d'être alimenté à la soufflante (9).

6. Procédé tel que revendiqué dans la revendication 1 dans lequel le mélange d'oxygène et d'ozone gazeux qui est alimenté aux lits d'adsorbant (A, B, C, D) comprend 1 à 30 %, en particulier 6 à 12 %, en volume d'ozone

7. Procédé tel que revendiqué dans la revendication 1 dans lequel une source d'azote est de l'air sec propre.

8. Procédé tel que revendiqué dans la revendication 1 dans lequel des réservoirs tampons sont connectés à une source choisie dans le groupe constitué de l'ozone récupéré, l'oxygène recyclé et l'un et l'autre.

9. Procédé tel que revendiqué dans la revendication 1 dans lequel les premier (A), deuxième (B), troisième (C) et quatrième (D) lits d'adsorbant contiennent un matériau adsorbant.

10. Procédé tel que revendiqué dans la revendication 9 dans lequel le matériau adsorbant est choisi dans le groupe constitué de gel de silice et zéolites à haute teneur en silice.

11. Procédé tel que revendiqué dans la revendication 10 dans lequel le gel de silice est de différentes tailles de particules.

12. Procédé tel que revendiqué dans la revendication 10 dans lequel les zéolites à haute teneur en silice sont choisies dans le groupe constitué de DAY, MFI et mordénite désaluminée.

13. Procédé tel que revendiqué dans la revendication 1 dans lequel le cycle est un cycle d'adsorption modulée en concentration.

14. Procédé tel que revendiqué dans la revendication 1 dans lequel la durée des étapes a) et c) et celle des étapes e) et g) sont égales et dans la plage de 5 à 500 secondes, en particulier dans la plage de 50 à 300 secondes, par exemple dans la plage de 60 à 180 secondes.

15. Procédé tel que revendiqué dans la revendication 1 dans lequel la durée des étapes b) et d) et celle des étapes f) et h) sont dans la plage de 30 à 80 % de l'étape a).
